# EUROPÄISCHE PATENTSCHRIFT

(11) **EP 2 682 316 B1**
(45) Veröffentlichungstag und Bekanntmachung des Hinweises auf die Patenterteilung: **17.10.2018**
(21) Anmeldenummer: 13175221.4
(22) Anmeldetag: 05.07.2013
(51) Int. Cl.: B60T 13/26, B60T 15/18

(54) **Steuerventil mit einer Einrichtung zur Erzeugung definierter Brems- und Lösezeiten**
Control valve with a device for generating defined braking and release times
Soupape de distribution dotée d'un dispositif de génération de temps de freinage et d'activation définis

(30) Priorität: 06.07.2012 DE 102012013523
(43) Veröffentlichungstag der Anmeldung: 08.01.2014
(73) Patentinhaber: KNORR-BREMSE Systeme für Schienenfahrzeuge GmbH, 80809 München (DE)
(72) Erfinder: Krauth, Christian, 86316 Friedberg (DE)

(56) Entgegenhaltungen:
- EP-A2- 0 152 958
- WO-A2-2012/038283
- DE-A1- 10 359 041
- DE-B3-102006 001 551
- US-A- 5 669 674

## Beschreibung

Die Erfindung betrifft ein Steuerventil für eine indirekt wirkende Druckluftbremse eines Schienenfahrzeuges, umfassend ein pneumatisches Relaisventil zur Steuerung eines Bremszylinderdrucks über einen Vorsteuerkreis zur Erzeugung eines zeitlich definierten Vorsteuerdrucks für die proportionale Ansteuerung des Relaisventils, wobei eine dem Vorsteuerkreis vorgeschaltete Einrichtung zur Erzeugung der Brems- und Lösezeiten der Druckluftbremse vorgesehen ist.

Das Einsatzgebiet der Erfindung ist der Schienenfahrzeugbau. Schienenfahrzeuge haben meist eine selbsttätige automatische Druckluftbremse, bei der die Absenkung des Drucks in einer Hauptluftleitung, ausgehend von einem Regelbetriebsdruck, die Ausbildung eines Bremszylinderdrucks hervorruft. Die Übertragungsfunktion vom sinkenden Druck in der Hauptluftleitung zum steigenden Bremszylinderdruck und umgekehrt wird von Steuerventilen der hier interessierenden Art ausgeführt.

Die Geschwindigkeit der Übertragung von Druckänderungen in der Hauptluftleitung, die Gradienten und die Gleichmäßigkeit des Auf- und Abbaus des Bremszylinderdrucks beim Bremsen und Lösen sind wesentliche Parameter, die den sicheren Betrieb langer, schwerer und schneller Züge ohne gefährliche längsdynamische Kräfte gestatten. Steuerventile weisen daher Einrichtungen zur zeitlichen Steuerung der Vorgänge auf, deren Effizienz direkt die Sicherheit und Wirtschaftlichkeit des Eisenbahnbetriebes beeinflussen.

Grundsätzlich ist es vorteilhaft, wenn der Druckanstieg in den Bremszylindern, beispielsweise bei einer plötzlichen Voll- oder Schnellbremsung, mit sogenannter Einheitswirkung erfolgt. Unter Einheitswirkung ist die Unabhängigkeit der Bremszylinderfüllzeit bei Schnellbremsung von der Größe des Bremszylindervolumens oder der Höhe des maximalen Bremszylinderdrucks in einem bestimmten Wertebereich zu verstehen. Die Füllung der Bremszylinder darf nicht zu schnell erfolgen, um gefährliche Längskräfte im Zug zu vermeiden; eine unnötig langsame Füllung würde dem gegenüber einen unnötig langen Bremsweg bedeuten und ist daher ebenso wenig erwünscht.

Aus der WO 2012/038283 A2 geht ein Steuerventil für eine Druckluftbremse eines Schienenfahrzeuges hervor, das im Wesentlichen aus einem pneumatischen Relaisventil zur Steuerung eines Bremszylinderdrucks, ein sogenannte Dreidruckorgan, sowie über einen Vorsteuerkreis zur Erzeugung eines Vorsteuerdrucks für die proportionale Ansteuerung des Relaisventils besteht. Um mit diesem Steuerventil die vorstehend erläuterte Einheitswirkung zu erzielen, ist auf dem Weg der Entlüftung des Druckes aus einer Steuerkammer des Vorsteuerkreises zur Umgebung eine variable Düse angeordnet, deren Querschnitt über Betätigungsmittel von einem geschlossenen Zustand über einen Minimalquerschnitt bis zu einem Maximalquerschnitt veränderbar ist. Die Veränderbarkeit kann dabei sowohl abgestuft als auch stufenlos durchgeführt werden. Neben zumindest einer Düse können mehrere Düsen parallel oder in Reihe geschaltet sein, wobei mindestens eine der mehreren Düsen als variable Düse ausgebildet ist.

Durch den veränderlichen Querschnitt lässt sich bei schneller Absenkung des Hauptluftleitungsdrucks eine ausreichend langsame Absenkung des Referenzdrucks im Vorsteuerkreis erzielen, der somit als Referenz für eine Bremszylinderfüllzeit mit Einheitswirkung verwendbar ist. Bei langsamer Absenkung des Hauptluftleitungsdrucks kann die Düse soweit vergrö-ßert werden, dass ein für die Beschleunigung der Bremsung erforderliches Luftvolumen ausströmen kann. Durch die beschleunigende Wirkung auf die Absenkung des Hauptluftleitungsdruckes kann dieses Steuerventil auch am Ende langer Züge optimal durch die Auswahl eines geeigneten Maximalquerschnittes der Drosselung eingestellt werden. Damit verbunden ist die Möglichkeit, durch eine geeignete Auswahl des Minimalquerschnittes für die Zugspitze eine ausreichend langsame Entwicklung des Bremszylinderdruckes einzustellen, was der Vermeidung gefährlicher Längskräfte dient. Beides gestattet letztendlich höhere Geschwindigkeiten oder größere Längen der Züge. Aufgrund der Wirkung der Düsenquerschnitte auf die Entlüftungsgeschwindigkeit eines Referenzdruckes aus einem konstanten Volumen ergibt sich weiterhin der Vorteil, dass die sich einstellenden Gradienten unabhängig von der Anzahl und der Größe der Bremszylinder sowie dem Bremszylinderhöchstdruck sind, so dass ein unifiziertes Steuerventil wirtschaftlich günstig hergestellt werden kann.

Bei den hier interessierenden Steuerventilen mit Einheitswirkung für Schienenfahrzeuge müssen die Zeiten zum Aufbau und Abbau der Bremsdrücke bestimmten vorgegebenen Normen entsprechen. So sind z.B. die Brems- und Lösezeiten im Merkblatt UIC 540 oder in der Norm EN 15355 definiert.

Bei Steuerventilen herkömmlicher Art wird die Erzeugung der Brems- und Lösezeiten durch eine Einrichtung erreicht, die dem Vorsteuerkreis des Steuerventils in der Druckluftversorgung sowie Entlüftung vorgeschaltet ist. Als Druckluftversorgung stellt die Einrichtung im Vorsteuerkreis einen konstanten Volumenstrom zur Verfügung, also ΔV/Δt = konstant. Als Entlüftung lässt die besagte Einrichtung wiederum einen definierten Volumenstrom zur Umgebung zu. Durch spezielle Düsen mit bestimmten Durchmessern zur Druckluftversorgung sowie Entlüftung eines Vorsteuervolumens mit bekannter Größe ergeben sich die gewünschten Geschwindigkeiten der Druckänderungen des Vorsteuerdrucks und dadurch die geforderten Brems- und Lösezeiten.

Die DE 103 59 041 A1 offenbart ein Steuerventil für eine Druckluftbremse, das über einen Bremshebel manuell betätigbar ist, um je nach Hebelstellung ein Belüftungsventil oder ein Entlüftungsventil einer pneumatischen Vorsteuerung zu betätigen. Je nach dem hierdurch erzeugten Vorsteuerdruck erfolgt die Betätigung einer Relaisventilanordnung, welche den vorgegebenen Bremsdruck in wenigstens einem Bremszylinder erzeugt. Hierbei werden einheitliche Brems- und Lösezeiten der Druckluftbremse erzeugt, indem Volumenströme mit konstanter Druckänderung für die Druckluftversorgung sowie die Entlüftung des Vorsteuerkreises erzeugt werden.

Es ist die Aufgabe der vorliegenden Erfindung die Brems- und Lösezeiten eines Steuerventils für die Druckluftbremse eines Schienenfahrzeuges unabhängig von der Größe des Vorsteuervolumens zu gestalten, um damit Einheitswirkung zu erzielen.

Die Aufgabe wird ausgehend von einem Steuerventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Einrichtung zur Erzeugung einheitlicher Brems- und Lösezeiten der Druckluftbremse spezielle Mittel zur Realisierung eines Volumenstroms mit konstanter Druckänderung für die Druckluftversorgung sowie für die Entlüftung des Vorsteuerkreises aufweist.

Die durch die erfindungsgemäße Maßnahme vom Vorsteuervolumen unabhängig erzeugten Brems- und Lösezeiten haben den Vorteil, dass das Steuerventil nicht auf die am Schienenfahrzeug vorhandene Größe des Vorsteuervolumens angepasst werden muss oder die Größe des Vorsteuervolumens am Schienenfahrzeug nicht zwingend genau eingehalten werden muss. In der Praxis ist die Einhaltung einer definierten Größe des Vorsteuervolumens für den Fahrzeugbauer oft aufwändig, da die Größe des Vorsteuervolumens je nach Länge der Druckluftleitung im Vorsteuerkreis von Fahrzeug zu Fahrzeug variieren kann oder im Voraus nicht bekannt ist.

Anhand der Erfindung umfassen die Mittel zur Realisierung eines Volumenstroms mit konstanter Druckänderung beim Vorsteuerkreis eine durch den Vorsteuerdruck gesteuerte variable Drosselung der Druckluftversorgung sowie auch der Entlüftung des Vorsteuerkreises.

Technisch wird die erfindungsgemäße Einrichtung zur Erzeugung der Brems- und Lösezeiten mit einer pneumatischen Druckvergleichsmembran gelöst, welche die gewünschte konstante Druckänderung durch Ansteuerung von Strömungsdrosseln herbeiführt. Verglichen wird der erzeugte Vorsteuerdruck mit einem Vergleichsdruck, welche beidseitig der Vergleichsmembran anliegen. Der Vergleichsdruck hat dabei ein definiertes Volumen, welches über eine Belüftungsdüse sowie Entlüftungsdüse durch Befüllen bzw. Entleeren eines Vergleichsdruckbehälters herbeigeführt wird.

Weiterhin betätigt die pneumatische Vergleichsmembran auch eine variable Strömungsdrossel zur Belüftung sowie eine variable Strömungsdrossel zur Entlüftung des Vorsteuerkreises.

Zur Realisierung des vorstehend beschriebenen Funktionsumfangs wird vorgeschlagen, ein gemeinsames 2x4/3-Wegeventil zu Verwenden, welche zum einen für die Bereitstellung des Vergleichsdruck sorgt sowie zum anderen auch die variable Strömungsdrossel zur Belüftung und die variable Strömungsdrossel zur Entlüftung des Vorsteuerdruckkreises beinhaltet. Ein solches 2x4/3-Wegeventil sollte im druckausgeglichenen Zustand der Vergleichsmembran dafür sorgen, dass beide Strömungsdrosseln für den Vorsteuerdruck geöffnet sind, wogegen die beiden Ventile zur Be- und Entlüftung des Vergleichsdruckbehälters geschlossen sind. Ausgehend von diesem druckausgeglichenen Zustand an der Vergleichsmembran, welcher der Mittelstellung des 2x4/3-Wegeventils entspricht, lassen sich die Be- und Entlüftungsfunktionen durch Wechsel zur oberen bzw. unteren Schaltstellung umsetzen.

Insoweit betätigt die Vergleichsmembran bei der Erfindung zwei variable Strömungsdrosseln zur Be- und Entlüftung des Vorsteuerkreises und gleichzeitig auch zwei Schaltventile zur Be- und Entlüftung des Vergleichsvolumens in integrierter Weise. Durch diese ventiltechnische Umsetzung der erfindungsgemäßen Lösung bleibt die Schaltgenauigkeit des nachfolgenden Einlassventils der Vorsteuerung unbeeinflusst.

Gemäß einer weiteren die Erfindung verbessernden Maßnahme ergibt sich durch geeignete Auslegung der Regelcharakteristik die Möglichkeit, eine asymptotische Druckangleichung beim Erreichen des vom Einlassventil des Vorsteuerkreises geregelten Vorsteuerdrucks zu vermeiden, wie es ansonsten bei einem konstant bedüsten Vorsteuervolumen im Stand der Technik der Fall ist. Zu diesem Zweck ist lediglich die Federrückstellung der Vergleichsmembran entsprechend auszulegen. Hierfür wird die Vergleichsmembran vorzugsweise beidseits mit einer Rückstellfeder beaufschlagt, welche die Vergleichsmembran ohne Druckluftbeaufschlagung in die Mittelstellung als Ausgangsstellung bringen.

Im Zusammenwirken mit dem erfindungsgemäß ausgebildeten 2x4/3-Wegeventil als Bestandteil der Einrichtung zur Erzeugung einheitlicher Brems- und Lösezeiten wird vorgeschlagen, das Einlassventil zur Regelung des Vorsteuerdrucks als ein 3/3-Wegeventil auszubilden, welches in einer ersten Schaltstellung eine Entlüftung des Vorsteuerkreises, in einer zweiten Schaltstellung eine Abschlussstellung sowie in einer dritten Schaltstellung eine Belüftung des Vorsteuerkreises nach Maßgabe einer an sich bekannten Druckregelung des Vorsteuerkreises ausführt.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Blockschaltbilddarstellung einer Einrichtung zur Erzeugung einheitlicher Brems- und Lösezeiten der Druckluftbremse, und
- Figur 2: eine schematische Blockschaltbilddarstellung eines Steuerventils für eine indirekt wirkende Druckluftbremse mit einer Einrichtung gemäß Figur 1.

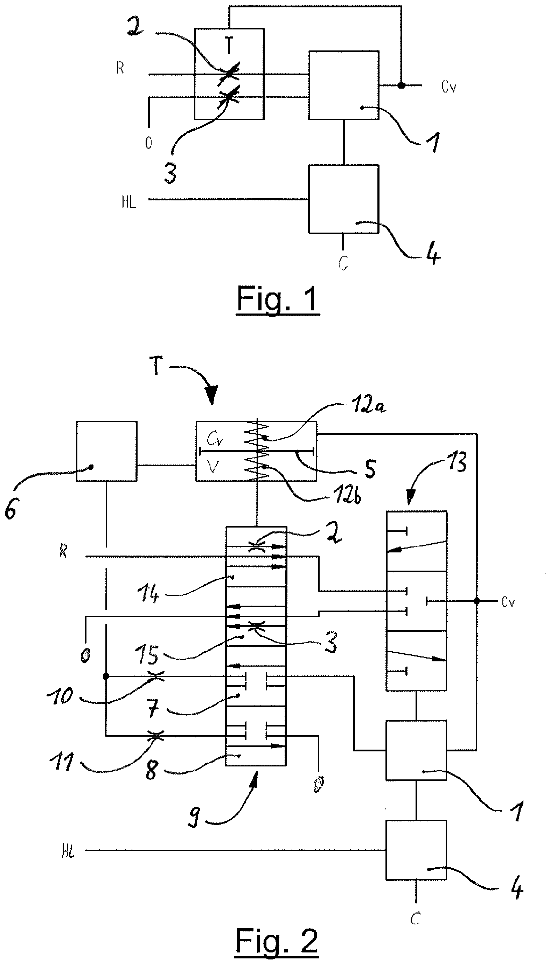

Gemäß Figur 1 besteht eine Einrichtung zur Erzeugung einheitlicher Brems- und Lösezeiten einer Druckluftbremse für ein Schienenfahrzeug im Wesentlichen aus einer dem Vorsteuerkreis 1 zur Erzeugung eines zeitlich definierten Vorsteuerdrucks c_{V} vorgeschalteten ersten variablen Strömungsdrossel 2 zur Belüftung des Vorsteuerkreises 1 ausgehend von einer Druckluftversorgung R sowie einer zweiten variablen Strömungsdrossel 3 zur Entlüftung des Vorsteuerkreises 1 an die Umgebung 0. Die erste variable Strömungsdrossel 2 zur Belüftung sowie die zweite variable Strömungsdrossel 3 zur Entlüftung des Vorsteuerkreises 1 bilden gemeinsam die erfindungsgegenständlichen Mittel T zur Realisierung eines Volumenstroms mit konstanter Druckänderung. Die konstante Druckänderung gilt somit sowohl für die Druckluftversorgung R als auch für die Entlüftung 0 des Vorsteuerkreises 1.

Die Steuerung des Bremszylinderdrucks C erfolgt ausgehend von dem Druck in einer Hauptluftleitung HL durch ein Relaisventil 4, welches pneumatisch über den Vorsteuerkreis 1 angesteuert wird.

Gemäß Figur 2 umfassen die Mittel T zur Realisierung eines Volumenstroms mit erfindungsgemäß konstanter Druckänderung für die Druckluftversorgung R sowie die Entlüftung 0 des Vorsteuerkreises 1 eine pneumatische Vergleichsmembran 5, welche einerseits vom Vorsteuerdruck c_{V} und andererseits von einem Vergleichsdruck V eines definierten Volumens beaufschlagt ist. Das definierte Volumen wird dabei von einem Vergleichsdruckbehälter 6 bereitgestellt, welcher durch Ventilteile 7 und 8 eines 2x4/3-Wegeventils 9 in Kombination mit je einer nachgeschalteten Belüftungsdüse 10 sowie einer Entlüftungsdüse 11 befüllbar bzw. entleerbar ist.

Zur Erzeugung der gewünschten einheitlichen Brems- und Lösezeiten der Druckluftbremse betätigt die pneumatische Vergleichsmembran 6 im Rahmen des gemeinsamen 2x4/3-Wegeventils 9 auch die variable Strömungsdrossel 2 zur Belüftung sowie die variable Strömungsdrossel 3 zur Entlüftung des Vorsteuerkreises 1, welche bei diesem Ausführungsbeispiel jeweils in den zugeordneten Ventilteilen 14 und 15 integriert angeordnet sind.

Die beiden Strömungsdrosseln 2 und 3 sind im hier dargestellten druckausgeglichenen Zustand der Vergleichsmembrane 5 geöffnet, wogegen die beiden Ventilteile 7 und 8 zur Be- und Entlüftung des Vergleichsdruckbehälters 6 gleichzeitig geschlossen sind. In der oberen Schaltstellung des 2x4/3-Wegeventils 9 erfolgt dagegen die Beaufschlagung des Vorsteuerdrucks c_{V} über die Strömungsdrossel 2, wobei der Vergleichsdruckbehälter 6 gleichzeitig auch mit dem Vorsteuerdruck c_{V} beaufschlagt wird. In der unteren Schaltstellung erfolgt über die variable Strömungsdrossel 3 die Entlüftung des Vorsteuerdrucks c_{V}, wobei gleichzeitig über das Ventilteil 8 der Vergleichsdruckbehälter 6 gedrosselt entlüftet wird.

Die Vergleichsmembran 5 ist beidseitig mit je einer Rückstellfeder 12a und 12b beaufschlagt, welche derart ausgelegt sind, dass bei Erreichen eines von einem Einlassventil 13 des Vorsteuerkreises 1 geregelten Vorsteuerdrucks c_{V} eine asymptotische Druckangleichung vermieden wird. Das Einlassventil 13 zur Regelung des Vorsteuerdrucks c_{V} ist als 3/3-Wegeventil ausgebildet und gestattet in einer ersten Schaltstellung eine Entlüftung des Vorsteuerdrucks c_{V}. Eine Mittelstellung dient als Absperrstellung. Eine untere Schaltstellung dient der Belüftung zur Erhöhung des Vorsteuerdrucks c_{V}.

Die Erfindung ist nicht beschränkt auf das vorstehend beschriebene bevorzugte Ausführungsbeispiel. Es können im Rahmen der nachfolgenden Ansprüche auch technische Abwandlungen vorgenommen werden, welche vom Schutzbereich mit umfasst sind. So ist es beispielsweise auch möglich, die erfindungsgemäße Einrichtung zur Erzeugung einheitlicher Brems- und Lösezeiten durch Herbeiführung konstanter Druckänderungen für die Druckluftversorgung R sowie die Entlüftung 0 des Vorsteuerkreises 1 auch mit anderen ventiltechnischen Mitteln auszuführen.

### Bezugszeichenliste

- 1: Vorsteuerkreis
- 2: erste variable Strömungsdrossel
- 3: zweite variable Strömungsdrossel
- 4: Relaisventil
- 5: pneumatische Vergleichsmembrane
- 6: Vergleichsdruckbehälter
- 7: erstes Ventilteil
- 8: zweites Ventilteil
- 9: Wegeventil
- 10: Belüftungsdüse
- 11: Entlüftungsdüse
- 12: Rückstellfeder
- 13: Einlassventil
- 14: drittes Ventilteil
- 15: viertes Ventilteil

- R: Druckluftversorgung
- 0: Entlüftung
- c_{V}: Vorsteuerdruck
- HL: Haupftluftleitung
- C: Bremszylinderdruck
- V: Vergleichsdruck

## Patentansprüche

1. Steuerventil für eine indirekt wirkende Druckluftbremse eines Schienenfahrzeuges, umfassend ein pneumatisches Relaisventil (4) zur Steuerung eines Bremszylinderdrucks (C) über einen Vorsteuerkreis (1) zur Erzeugung eines zeitlich definierten Vorsteuerdrucks (c_{V}) für die proportionale Ansteuerung des Relaisventils (4), wobei eine dem Vorsteuerkreis (1) vorgeschaltete Einrichtung zur Erzeugung der Brems- und Lösezeiten der Druckluftbremse vorgesehen ist, welche zur Erzeugung einheitlicher Brems- und Lösezeiten der Druckluftbremse Mittel (T) zur Realisierung eines Volumenstroms mit konstanter Druckänderung für die Druckluftversorgung (R) sowie die Entlüftung (0) des Vorsteuerkreises (1) aufweist,
**dadurch gekennzeichnet, dass** die Mittel (T) zur Realisierung eines Volumenstroms mit konstanter Druckänderung beim Vorsteuerkreis (1) eine durch den Vorsteuerdruck (c_{V}) gesteuerte variable Drosselung der Druckluftversorgung (R) sowie Entlüftung (0) des Vorsteuerkreises (c_{V}) umfassen, wobei eine pneumatische Vergleichsmembrane (5) zur variablen Drosselung der Druckluftversorgung (R) sowie Entlüftung (0) des Vorsteuerkreises (c_{V}) vorgesehen ist, die einerseits vom Vorsteuerdruck (c_{V}) und andererseits von einem Vergleichdruck (V) eines definierten Volumens beaufschlagt ist.

2. Steuerventil nach Anspruch 1,
**dadurch gekennzeichnet, dass** ein Vergleichsdruckbehälter (6) den Vergleichdruck (V) für die pneumatische Vergleichsmembrane (5) bereitgestellt, welcher durch Ventilteile (7; 8) über eine Belüftungsdüse (10) sowie eine Entlüftungsdüse (11) befüllbar bzw. entleerbar ist.

3. Steuerventil nach Anspruch 1,
**dadurch gekennzeichnet, dass** die pneumatische Vergleichsmembrane (6) eine variable Strömungsdrossel (2) zur Belüftung sowie eine variable Strömungsdrossel (3) zur Entlüftung des Vorsteuerdruckkreises (cV) betätigt.

4. Steuerventil nach Anspruch 2 und 3,
**dadurch gekennzeichnet, dass** die Bereitstellung des Vergleichsdrucks (V) sowie die variable Strömungsdrossel (2) zur Belüftung und die variable Strömungsdrossel (3) zur Entlüftung des Vorsteuerkreises (1) mit einem gemeinsamen 2x4/3-Wegeventil (9) realisiert sind.

5. Steuerventil nach Anspruch 4,
**dadurch gekennzeichnet, dass** im druckausgeglichenen Zustand der Vergleichsmembrane (5) die beiden Strömungsdrosseln (2, 3) für den Vorsteuerdruck (c_{V}) geöffnet sind, wogegen die beiden Ventilteile (7, 8) zur Be- und Entlüftung des Vergleichdruckbehälters (6) geschlossen sind.

6. Steuerventil nach Anspruch 1,
**dadurch gekennzeichnet, dass** mindestens eine die Vergleichsmembrane (5) beaufschlagende Rückstellfeder (12a, 12b) derart ausgelegt ist, dass bei Erreichen eines von einem Einlassventil (13) des Vorsteuerkreises (1) geregelten Vorsteuerdrucks (c_{V}) eine asymptotische Druckangleichung vermieden wird.

7. Steuerventil nach Anspruch 6,
**dadurch gekennzeichnet, dass** das Einlassventil (13) zur Regelung des Vorsteuerdrucks (c_{V}) als ein 3/3-Wegeventil ausgebildet ist.

8. Druckluftbremse eines Schienenfahrzeuges, umfassend mindestens ein Steuerventil nach einem der vorstehenden Ansprüche.

## Claims

1. Control valve for an indirectly acting compressed-air brake of a rail vehicle, comprising a pneumatic relay valve (4) for controlling a brake cylinder pressure (C) via a pilot-control circuit (1) for generating a temporally defined pilot-control pressure (c_{V}) for the proportional activation of the relay valve (4), wherein, connected upstream of the pilot-control circuit (1), there is provided a device for generating the braking and release times of the compressed-air brake, which device, for generating uniform braking and release times of the compressed-air brake, has means (T) for realizing a volume flow with constant pressure change for the compressed-air supply (R) and the deaeration (0) of the pilot-control circuit (1),
**characterized in that** the means (T) for realizing a volume flow with constant pressure change in the pilot-control circuit (1) comprise a variable throttle, controlled by the pilot-control pressure (c_{V}), of the compressed-air supply (R) and deaeration (0) of the pilot-control circuit (c_{V}), wherein a pneumatic comparison diaphragm (5) for the variable throttling of the compressed-air supply (R) and deaeration (0) of the pilot-control circuit (c_{V}) is provided, said pneumatic comparison diaphragm being acted on on one side by the pilot-control pressure (c_{V}) and on the other side by a comparison pressure (V) of a defined volume.

2. Control valve according to Claim 1,
wherein a comparison pressure vessel (6) provides the comparison pressure (V) for the pneumatic comparison diaphragm (5), which comparison pressure vessel can be charged and evacuated via an aeration nozzle (10) and a deaeration nozzle (11) by valve parts (7; 8).

3. Control valve according to Claim 1,
**characterized in that** the pneumatic comparison diaphragm (5) actuates a variable flow throttle (2) for aeration and a variable flow throttle (3) for deaeration of the pilot-control pressure circuit (c_{V}).

4. Control valve according to Claim 2 and 3,
**characterized in that** the provision of the comparison pressure (V) and the variable flow throttle (2) for aeration and the variable flow throttle (3) for deaeration of the pilot-control circuit (1) are realized with a common 2x4/3 directional valve (9).

5. Control valve according to Claim 4,
**characterized in that** in the pressure-balanced state of the comparison diaphragm (5), the two flow throttles (2, 3) for the pilot-control pressure (c_{V}) are open, whereas the two valve parts (7, 8) for aeration and deaeration of the comparison pressure vessel (6) are closed.

6. Control valve according to Claim 1,
**characterized in that** at least one restoring spring (12a, 12b) which acts on the comparison diaphragm (5) is configured such that, when a pilot-control pressure (c_{V}) regulated by an inlet valve (13) of the pilot-control circuit (1) is reached, an asymptotic pressure alignment is avoided.

7. Control valve according to Claim 6,
**characterized in that** the inlet valve (13) for the regulation of the pilot-control pressure (c_{V}) is in the form of a 3/3 directional valve.

8. Compressed-air brake of a rail vehicle, comprising at least one control valve according to one of the preceding claims.

## Revendications

1. Soupape de commande pour un frein à air comprimé à effet indirect d'un véhicule ferroviaire, comprenant une soupape (4) relais pneumatique pour la commande d'une pression (C) d'un cylindre de frein par un circuit (1) pilote pour la production d'une pression (cᵥ) pilote définie dans le temps pour la commande proportionnelle de la soupape (4) relais, dans laquelle il est prévu un dispositif en amont du circuit (1) pilote de production des temps de serrage et de desserrage du frein à air comprimé, qui, pour la production de temps unitaires de serrage et de desserrage du frein à air comprimé a des moyens (T) de réalisation d'un courant en volume à variation de pression constante pour l'alimentation (R) en air comprimé ainsi que pour la purge (0) du circuit (1) pilote,
**caractérisée en ce que** les moyens (T) de réalisation d'un courant en volume à variation de pression constante au circuit (1) pilote comprennent un étranglement variable commandé par la pression (cᵥ) pilote de l'alimentation (R) en air comprimé ainsi que de la purge du circuit (cᵥ) pilote, dans laquelle une membrane (5) pneumatique de comparaison est prévue pour l'étranglement variable de l'alimentation (R) en air comprimé ainsi que de la purge d'air (0) du circuit (cᵥ) pilote, membrane qui est soumise d'une part à la pression (cᵥ) pilote et d'autre part à une pression (V) de comparaison d'un volume défini.

2. Soupape de commande suivant la revendication 1,
**caractérisée en ce qu'**un récipient (6) de comparaison procure la pression (V) de comparaison pour la membrane (5) pneumatique de comparaison, récipient qui peut être rempli ou vidé par des parties (7; 8) de soupape par l'intermédiaire d'une buse (10) d'entrée d'air ainsi que par une buse (11) de sortie d'air.

3. Soupape de commande suivant la revendication 1,
**caractérisée en ce que** la membrane (6) pneumatique de comparaison actionne un étranglement (2) de courant variable pour l'alimentation en air du circuit (cV) de pression pilote ainsi qu'un étranglement de courant variable pour sa purge d'air.

4. Soupape de commande suivant la revendication 2 et 3,
**caractérisée en ce que** la mise à disposition de la pression (V) de comparaison ainsi que l'étranglement (2) de courant variable pour l'alimentation en air ainsi que l'étranglement de courant variable pour la purge d'air du circuit (1) pilote sont réalisés par une soupape (9) commune à 2x4/3 voies.

5. Soupape de commande suivant la revendication 4,
**caractérisée en ce que**, dans l'état compensé en pression de la membrane (5) de comparaison, les deux étranglements (2, 3) de courant pour la pression (cᵥ) pilote sont ouverts, tandis que les deux parties (7, 8) de soupape sont fermées pour alimenter en air le récipient (6) de pression de comparaison et pour le purger.

6. Soupape de commande suivant la revendication 1,
**caractérisée en ce qu'**au moins un ressort (12a, 12b) de rappel, s'appliquant à la membrane (5) de comparaison, est conçu de manière à empêcher, lorsqu'une pression (cᵥ) pilote régulée par une soupape (13) d'entrée du circuit (1) pilote est atteinte, une égalisation de pression asymptotique.

7. Soupape de commande suivant la revendication 6,
**caractérisée en ce que** la soupape (13) d'entrée pour réguler la pression (cᵥ) pilote est constituée sous la forme d'une soupape à 3/3 voies.

8. Frein à air comprimé d'un véhicule ferroviaire, comprenant au moins une soupape de commande suivant l'une des revendications précédentes.
